Europäisches Patentamt

European Patent Office

Office européen des brevets

(19)

(11) Veröffentlichungsnummer: **0 425 959 A2**

# (12) EUROPÄISCHE PATENTANMELDUNG

(21) Anmeldenummer: 90120221.8

(22) Anmeldetag: 22.10.90

(51) Int. Cl.⁵: **G05B 19/415**

(30) Priorität: 02.11.89 DE 3936524

(43) Veröffentlichungstag der Anmeldung:
08.05.91 Patentblatt 91/19

(84) Benannte Vertragsstaaten:
**DE FR IT SE**

(71) Anmelder: **Siemens Aktiengesellschaft**
**Wittelsbacherplatz 2**
**W-8000 München 2(DE)**

(72) Erfinder: **Hoos, Gerd, Dipl.-Ing.**
**Schleienweg 7**
**W-8520 Erlangen(DE)**
Erfinder: **Fenart, Christoph**
**5 Avenue Gambetta**
**F-59240 Dunkerque(FR)**

(54) **Verfahren zur Bahnsteuerung bei einer Werkzeugmaschine oder einem Roboter.**

(57) Zirkularbahnen werden üblicherweise aus einem Anfangspunkt (P1), einem Zwischenpunkt (P2) und einem Endpunkt (P3) generiert. Bei unplanmäßigen Unterbrechungen der Bahnfahrt liegt der jeweilige Stopp-Punkt nicht unbedingt auf der planmäßigen Zirkularbahn. Unter Zugrundelegung des Stopp-Punktes, des Anfangs- (P1) oder des Zwischenpunktes (P2) sowie des Endpunktes wird dann eine neue korrigierte Zirkularbahn generiert, die in ihrem Verlauf der planmäßigen Zirkularbahn möglichst nahe kommt. Der Richtungssinn (RI) der planmäßigen Zirkularbahn wird dabei aufrechterhalten.

FIG 2

EP 0 425 959 A2

## VERFAHREN ZUR BAHNSTEUERUNG BEI EINER WERKZEUGMASCHINE ODER EINEM ROBOTER

Die Erfindung bezieht sich auf ein Verfahren zur Bahnsteuerung bei einer Werkzeugmaschine oder einem Roboter, wobei eine planmäßige Zirkularbahn durch drei signifikante Bahnorte, nämlich einen Anfangspunkt, einen Zwischenpunkt und einen Endpunkt, vorgegeben wird, und wobei bei einer Unterbrechung der Zirkularbahnfahrt der jeweilige Stopp-Punkt registriert wird.

Bei handelsüblichen numerischen Steuerungen ist es üblich, daß aus drei im Anwenderprogramm vorgegebenen Punkten eine Kreisbahn bzw. eine Bahn über einen Teilkreis vorgegeben wird. Wenn die drei Punkte als Anfangspunkt P1, Zwischenpunkt P2 und Endpunkt P3 einer anzustrebenden Bewegungsbahn anzusehen sind, ist die Bahnrichtung so festgelegt, daß sie von P1 über P2 nach P3 führt.

Beim Abfahren einer planmäßigen Zirkularbahn kann es durch Crash-Fahrt, Not-Aus usw. zu einer Unterbrechung der Zirkularbahnfahrt kommen. Die Stopp-Position weicht dabei häufig signifikant von der planmäßigen Zirkularbahn ab. Diese Abweichung entsteht beispielsweise durch den Schleppfehler bzw. den Crash.

Zum Fortsetzen einer unterbrochenen planmäßigen Zirkularbahnfahrt muß dann eine neue, korrigierte Zirkularbahn aus dem Stopp-Punkt sowie dem Zwischenpunkt und Endpunkt der planmäßigen Zirkularbahn generiert werden. Eine derartige Bahn weicht, wie im folgenden noch dargelegt wird, unter Umständen erheblich von der planmäßigen Zirkularbahn ab.

Aufgabe der Erfindung ist, ein Verfahren der eingangs genannten Art so auszubilden, daß die korrigierte Zirkularbahn in ihrem Verlauf der planmäßigen Zirkularbahn möglichst weit angenähert ist, wobei sichergestellt sein soll, daß der Endpunkt der korrigierten Zirkularbahn mit dem Endpunkt der planmäßigen Zirkularbahn übereinstimmt.

Gemäß der Erfindung wird diese Aufgabe dadurch gelöst, daß der Stopp-Punkt der Anfangspunkt einer ebenfalls aus drei Bahnorten generierbaren korrigierten Zirkularbahn angibt, deren Endpunkt der Endpunkt der planmäßigen Zirkularbahn ist, und daß als Zwischenpunkt der korrigierten Zirkularbahn entweder der Anfangspunkt oder der Zwischenpunkt der planmäßigen Zirkularbahn gewählt ist und zwar dergestalt, daß die Abweichung des Verlaufs der korrigierten Zirkularbahn zur planmäßigen Zirkularbahn minimiert ist, wobei allerdings für die Richtung der korrigierten Zirkularbahn die Richtung der planmäßigen Zirkularbahn beibehalten wird.

Da die Verfahrbewegung normalerweise nach einem neuerlichen Starten zwischen dem Stopp-Punkt und dem Endpunkt erfolgt, erweist es sich gemäß einer ersten Ausbildung der Erfindung von Vorteil, daß die Minimierung nur auf den Bereich der neuen Zirkularbahn vom Stopp-Punkt bis zum Endpunkt vorgenommen wird.

Zunächst sei der Fall angenommen, daß der Stopp-Punkt zwischen dem Anfangspunkt und dem Zwischenpunkt der planmäßigen Zirkularbahn liegt. In diesem Fall kann ein einfaches Kriterium gefunden werden, das angibt, ob für die korrigierte Zirkularbahn als Zwischenpunkt der Anfangspunkt oder der Zwischenpunkt der planmäßigen Zirkularbahn herangezogen wird. Dies geschieht so, daß bei einem Stopp zwischen dem Anfangspunkt und dem Zwischenpunkt der planmäßigen Zirkularbahn die Entfernung zwischen dem Stopp-Punkt und dem Anfangspunkt sowie dem Stopp-Punkt und dem Zwischenpunkt der planmäßigen Zirkularbahn ermittelt wird, und daß der jeweils weiter entfernte dieser Punkte als Zwischenpunkte der korrigierten Zirkularbahn ausgewählt wird.

Neben dieser Entfernungsbetrachtung erweist es sich bei dem Abfahren einer Zirkularbahn aufgrund der dabei vorliegenden Winkelbewegung als ausgesprochen einfach, daß bei einem Stopp zwischen dem Anfangspunkt und dem Zwischenpunkt der planmäßigen Zirkularbahn der Verfahrwinkel zwischen Stopp-Punkt und Anfangspunkt der planmäßigen Zirkularbahn sowie Stopp-Punkt und Zwischenpunkt der planmäßigen Zirkularbahn ermittelt wird und daß der jeweils winkelmäßig entferntere dieser Punkte als Zwischenpunkt der korrigierten Zirkularbahn ausgewählt wird.

In diesem Zusammenhang ist auch eine einfache Grenzwinkelbetrachtung möglich, indem so vorgegangen wird, daß bei einem Stopp zwischen Anfangspunkt und Zwischenpunkt der planmäßigen Zirkularbahn dann, wenn der Verfahrwinkel des Stopp-Punktes den mittleren Verfahrwinkel zwischen Anfangspunkt und Zwischenpunkt der planmäßigen Zirkularbahn noch nicht überschritten hat, der Zwischenpunkt der planmäßigen Zirkularbahn als Zwischenpunkt der korrigierten Zirkularbahn ausgewählt wird und daß dann, wenn der Verfahrwinkel den mittleren Verfahrwinkel überschritten hat, aber den Zwischenpunkt der planmäßigen Zirkularbahn noch nicht überschritten hat, der Anfangspunkt der planmäßigen Zirkularbahn als Zwischenpunkt der korrigierten Zirkularbahn ausgewählt wird.

Neben einem Stopp der Bewegung auf der planmäßigen Zirkularbahn vor Erreichen des zugehörigen Zwischenpunktes, ist auch ein Stopp zwischen Zwischenpunkt und Endpunkt der planmäßigen Zirkularbahn denkbar. Auch hierbei ist ein Kriterium zu schaffen, das angibt, ob vom Stopp-Punkt über den Zwischenpunkt der planmäßigen Zirkularbahn oder den Anfangspunkt der planmäßigen Zirkularbahn zusammen mit dem Endpunkt der planmäßigen Zirkularbahn die korrigierte Zirkularbahn zu generieren ist. Es erweist sich dabei als ausgesprochen einfach, daß bei einem Stopp zwischen dem Zwischenpunkt und dem Endpunkt der planmäßigen Zirkularbahn eine Grenze vom Zwischenpunkt der planmäßigen Zirkularbahn aus vorgegeben ist, bei deren Überschreiten der Zwischenpunkt der planmäßigen Zirkularbahn als Zwischenpunkt der korrigierten Zirkularbahn ausgewählt wird und bei deren Unterschreiten der Anfangspunkte der planmäßigen Zirkularbahn als Zwischenpunkt der korrigierten Zirkularbahn ausgewählt wird. Damit wird sichergestellt, daß bei einem Stopp in unmittelbarer Nähe zum Zwischenpunkt der planmäßigen Zirkularbahn dieser ser Zwischenpunkt zum Generieren der korrigierten Zirkularbahn nicht gewählt wird, weil dies zu besonders starken Abweichungen zwischen dem Verlauf der korrigierten Zirkularbahn gegenüber der planmäßigen Zirkularbahn führen würde.

In diesem Zusammenhang erweist es sich aufgrund der Winkelbewegung beim Abfahren einer Zirkularbahn als ausgesprochen einfach, daß als Grenze ein Grenzwinkel vorgegeben ist.

In diesem Fall kann mit relativ guten Ergebnissen hinsichtlich der Konturtreue dieser Grenzwinkel so gewählt werden, daß er der Größe des halben Winkels zwischen Zwischenpunkt und Endpunkt der planmäßigen Zirkularbahn entspricht.

Ein Ausführungsbeispiel der Erfindung ist in der Zeichnung dar gestellt und wird im folgenden näher erläutert. Dabei zeigen:

FIG 1 signifikante Bewegungsbahnen gemäß dem Stand der Technik,

FIG 2 signifikante Bewegungsbahnen zum Veranschaulichen der Erfindung und

FIG 3 ein Blockschaubild.

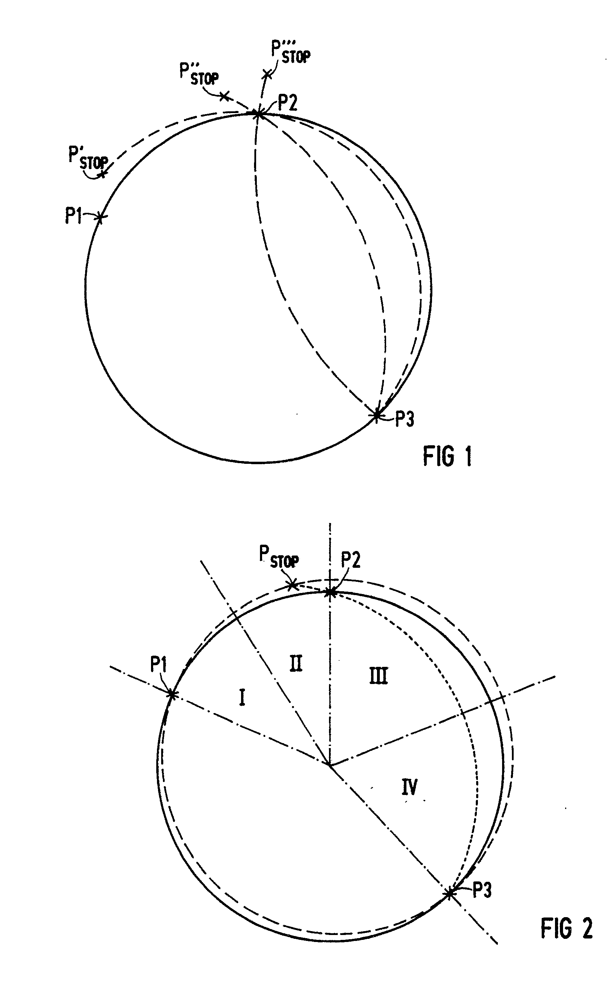

In der Darstellung gemäß FIG 1 ist mit einer durchgezogenen Linie eine planmäßige Zirkularbahn gezeigt, gemäß der der Arm eines Roboters oder das Werkzeug einer Werkzeugmaschine mit Hilfe einer numerischen Steuerung zu bewegen ist. Die >Zirkularbahn verläuft dabei durch drei Bahnorte, von denen ein Punkt P1 den Anfangspunkt, ein Punkt P2 einen Zwischenpunkt und ein Punkt P3 einen Endpunkt darstellt. Die Hinweise auf Anfangs- und Endpunkt sollen zeigen, daß die eigentliche Bewegung keinen vollständigen Kreis, sondern einen Teilkreis vom Punkt P1 über den Punkt P2 zum Punkt P3 ausführt.

Es sei nun der Fall angenommen, daß aufgrund einer grash-Fahrt die planmäßige Zirkularbahn verlassen wird und das Werkzeug oder der Roboterarm die Position P$'_{STOP}$ einnehmen möge. Nach einer Unterbrechung des Bewegungsablaufes muß es nun Ziel sein, das Werkzeug oder den Roboterarm vom Ort der Unterbrechung zum Endpunkt zu bewegen. Dies erfolgt bei handelsüblichen Verfahren so, daß der Ort der Unterbrechung den Anfangspunkt für eine korrigierte Zirkularbahn darstellt, für die der Punkt P2 wiederum einen Zwischenpunkt darstellt und für den der Punkt P3 den Endpunkt darstellt. Unter dieser Annahme würde eine neue Bewegungsbahn generiert werden, die in der Darstellung vom Stopp-Punkt P$'_{STOP}$ über den Zwischenpunkt P2 zum Endpunkt P3 führt. Diese Bahn ist gestrichelt angedeutet.

Die Abweichung dieser korrigierten Zirkularbahn gegenüber der planmäßigen Zirkularbahn ist relativ gering, sofern der Stopp-Punkt P$'_{STOP}$ sich in der Nähe des Anfangspunktes P1 befindet. Im weiteren sei jedoch der Fall angenommen, daß der Stopp-Punkt sich nicht mehr in der Nähe des Anfangspunktes P1 befindet, sondern sich dem Zwischenpunkt P2 annähert.

Bei einem in diesem Sinne angenommenen Stopp-Punkt P$''_{STOP}$ zeigt die ebenfalls durch eine gestrichelte Linie angedeutete korrigierte Zirkularbahn schon eine wesentlich stärkere Abweichung vom Verlauf der planmäßigen Zirkularbahn und bei einem Stopp-Punkt P$''_{STOP}$ der sich bereits hinter dem Zwischenpunkt P2 befindet, ergibt sich ein nochmals verschlechtertes Verhalten.

Es ist leicht einsichtig, daß eine korrigierte Zirkularbahn, die wesentlich von der planmäßigen Zirkularbahn abweicht, eine Gefährdung für den Fertigungsablauf darstellt.

In der Darstellung gemäß FIG 2 wird das Verfahren gemäß der Erfindung unter Zugrundelegung einer der nach FIG 1 gleichen planmäßigen Zirkularbahn durch die Punkte P1, P2 und P3 geschildert.

Der Verlauf der planmäßigen Zirkularbahn ist dabei in Sektoren I bis IV aufgeteilt, denen folgende Bedeutung zukommt. Wenn ein Stopp-Punkt im Bereich des Sektors I liegt, wird die korrigierte Zirkularbahn durch den Stopp-Punkt, den Zwischenpunkt P2 und den Endpunkt P3 gebildet.

Sofern der Stopp-Punkt, in diesem Fall ein Punkt P$_{STOP}$, im Sektor II liegt, wird die Bahn nicht mehr so wie in FIG 1 dergestalt gebildet, daß die Bahn ausgehend vom Stopp-Punkt P$_{STOP}$ über den Zwischenpunkt P2 zum Endpunkt P3 führt, wie dieser Verlauf durch eine punktierte Linie angedeutet ist, sondern die korrigierte Zirkularbahn wird so gewählt, daß sie aus dem Stopp-Punkt P$_{STOP}$ sowie dem Anfangspunkt P1 und dem Endpunkt P3 der planmäßigen Zirkularbahn generiert wird. Der Verlauf einer derartigen Zirkularbahn ist in der Darstellung durch eine gestrichelte Linie angedeutet. Diese Zirkularbahn schmiegt sich der planmäßigen Zirkularbahn wesentlich besser als der zuvor geschilderte Bahnverlauf an. Da der Richtungssinn einer solchermaßen gebildeten Zirkularbahn jedoch invers zur planmäßigen Zirkularbahn ist, muß in diesem Fall eine Richtungsänderung vorgenommen werden, damit das Werkzeug oder der Roboter dann auf dieser korrigierten Zirkularbahn vom Stopp-Punkt $P_{STOP}$ im ursprünglichen Richtungssinn entlang der gestrichelt gezeigten korrigierten Zirkularbahn zum Endpunkt P3 führt. Eine solche Maßnahme läßt sich in der Steuerung jedoch völlig problemlos treffen.

Die Lage der Sektorengrenze zwischen Sektoren I und II, die wie alle weiteren Sektorengrenzen jeweils strichpunktiert angedeutet ist, wird dabei so getroffen, daß die von den Sektoren I und II, die vom Mittelpunkt der planmäßigen Zirkularbahn ausgehen, jeweils eingeschlossenen Winkel gleich sind.

Sofern der Stopp-Punkt zwischen dem Zwischenpunkt P2 und dem Endpunkt P3 liegt, kann eine korrigierte Zirkularbahn so gebildet werden, daß der Stopp-Punkt deren Anfangspunkt angibt und daß entweder der Anfangspunkt P1 oder der Zwischenpunkt P2 der planmäßigen Zirkularbahn den Zwischenpunkt für die korrigierte Zirkularbahn angibt, deren Endpunkt der Endpunkt P3 der planmäßigen Zirkularbahn ist. Der erstere Fall wird dann getroffen, wenn der Stopp-Punkt sich innerhalb des Sektors III befindet, der zweite Fall dann, wenn sich der Stopp-Punkt innerhalb des Sektors IV befindet. Die Lage der Sektorengrenzen zwischen den Sektoren III und IV kann dabei in technisch ausgesprochen einfacher Weise so gestaltet sein, daß die von den Sektoren III und IV jeweils eingeschlossenen Winkel gleich groß sind. Für den Fall, daß der Stopp-Punkt innerhalb der Sektoren III und IV liegt, ergibt sich eine korrigierte Zirkularbahn, deren Richtungssinn nicht dem Richtungssinn der planmäßigen Zirkularbahn entspricht, und auch in diesem Fall ist eine Inversion der Bewegungsrichtung erforderlich.

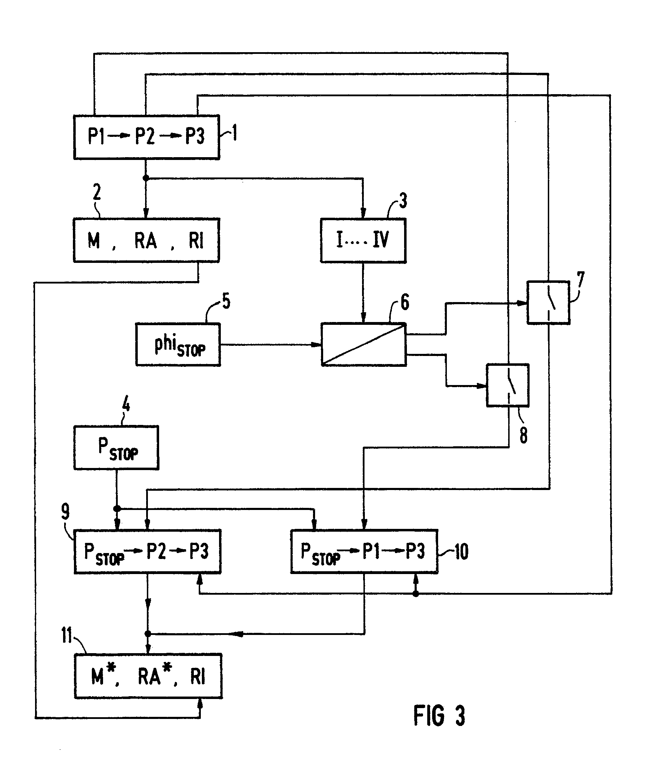

Ein Blockdiagramm zum Veranschaulichen der Verfahrensweise ist in der Darstellung gemäß FIG 3 gezeigt. In einem Block 1 befindet sich die Angabe, daß eine Zirkularbahn ausgehend von einem Anfangspunkt P1 über einen Zwischenpunkt P2 zu einem Endpunkt P3 führen möge. Dazu sind die zugehörigen Koordinatenwerte der Punkt P1, P2 und P3 vorgegeben. Aus diesen Angaben wird von einem Block 2 eine planmäßige Zirkularbahn generiert, der ein Mittelpunkt M, ein Radius RA und einer Richtung RI zu eigen sind. Zu einer derartigen planmäßigen Zirkularbahn können in einem Block 4 die gemäß den eingangs genannten Bedingungen zu bildenden Sektoren I bis IV vorgegeben sein.

Wenn nun ein Stopp der Bahnfahrt erfolgt, wird der zugehörige Stopport $P_{STOP}$ in einem Block 4 und der zugehörige Winkel in Bezug auf die planmäßige Zirkularbahn in einem Block 5 als Winkel $phi_{STOP}$ festgehalten. Es wird nun untersucht, in welchem der Sektoren I bis IV der Stopp-Fall erfolgte, was in einem Block 6 geschieht. Demgemäß wird über eine Schaltstufe 7 oder eine Schaltstufe 8 entweder der Zwischenort P2 oder der Anfangspunkt P1 der planmäßigen Zirkularbahn als Zwischenort für die zu generierende korrigierte Zirkularbahn vorgegeben. Als Endpunkt der korrigierten Zirkularbahn wird der Endpunkt P3 der planmäßigen Zirkularbahn herangezogen. Diese Vorgänge erfolgen in Blöcken 9 und 10.

In gleicher Weise wie der Umsetzvorgang im Block 2 erfolgt, so wird auch entweder vom Block 9 oder vom Block 10 aus den Orten $P_{STOP}$, P2 und P3 bzw. $P_{STOP}$, P1 und P3 jeweils die korrigierte Zirkularbahn ermittelt. Dieser ist ein Mittelpunkt M* und ein Radius RA* zu eigen, wie dies in einem Block 11 angedeutet ist. Der Richtungssinn dieser korrigierten Zirkularbahn wird dabei unabhängig davon, welcher Richtungssinn durch die Blöcke 9 und 10 bestimmt wird, dem Richtungssinn der planmäßigen Zirkularbahn angepaßt, wie dies durch die Symbolik RI ohne das Zeichen "*" im Block 11 verdeutlicht ist. Demzufolge wird ein Richtungssinn, wie er unter Zugrundelegung der im Block 10 hinterlegten Informationen entsteht, invertiert.

Beim Ausführungsbeispiel stellt der Endpunkt der planmäßigen Zirkularbahn stets auch den Endpunkt der korrigierten Zirkularbahn dar. Prinzipiell wäre es allerdings auch möglich, daß der Endpunkt der planmäßigen Zirkularbahn als Zwischenpunkt der korrigierten Zirkularbahn verwendet wird. So ließe sich auch aus der Punktfolge P'$_{STOP}$ nach P3 und P2 (FIG 1) eine korrigierte Zirkularbahn ermitteln.

## Ansprüche

1. Verfahren zur Bahnsteuerung bei einer Werkzeugmaschine oder einem Roboter, wobei eine planmäßige Zirkularbahn durch drei signifikante Bahnorte, nämlich einen Anfangspunkt, einen Zwischenpunkt und einen Endpunkt, vorgegeben wird, und wobei bei einer Unterbrechung der Zirkularbahnfahrt der jeweilige Stopp-Punkt registriert wird, **dadurch gekennzeichnet,** daß der Stopp-Punkt ($P_{STOP}$) dar Anfangspunkt einer ebenfalls aus drei Bahnorten generierbaren korrigierten Zirkularbahn angibt, deren Endpunkt der Endpunkt der planmäßigen Zirkularbahn ist, und daß als Zwischenpunkt der korrigierten Zirkularbahn entweder der Anfangspunkt (P1) oder der Zwischenpunkt (P2) der planmäßigen Zirkularbahn gewählt ist und zwar dergestalt, daß die Abweichung des Verlaufs der korrigierten Zirkularbahn zur planmäßigen Zirkularbahn minimiert ist, wobei allerdings für die Richtung (RI) der korrigierten Zirkularbahn die Richtung (RI) der planmäßigen Zirkularbahn beibehalten wird.

2. Verfahren nach Anspruch 1, **dadurch gekennzeichnet**, daß die Minimierung nur auf den Bereich der neuen Zirkularbahn vom Stopp-Punkt ($P_{STOP}$) bis zum Endpunkt (P3) vorgenommen wird.

3. Verfahren nach Anspruch 1 oder 2, **dadurch gekennzeichnet,** daß bei einem Stopp zwischen dem Anfangspunkt (P1) und dem Zwischenpunkt (P2) der planmäßigen Zirkularbahn die Entfernung zwischen dem Stopp-Punkt ($P_{STOP}$) und dem Anfangspunkt (P1) sowie dem Stopp-Punkt ($P_{STOP}$) und dem Zwischenpunkt (P2) der planmäßigen Zirkularbahn ermittelt wird und daß der jeweils weiter entfernte dieser Punkte (P1, P2) als Zwischenpunkt der korrigierten Zirkularbahn ausgewählt wird.

4. Verfahren nach Anspruch 1 oder 2, **dadurch gekennzeichnet,** daß bei einem Stopp zwischen dem Anfangspunkt (P1) und dem Zwischenpunkt (P2) der planmäßigen Zirkularbahn der Verfahrwinkel zwischen Stopp-Punkt ($P_{STOP}$) und Anfangspunkt (P1) der planmäßigen Zirkularbahn sowie Stopp-Punkt ($P_{STOP}$) und Zwischenpunkt (P2) der planmäßigen Zirkularbahn ermittelt wird und daß der jeweils winkelmäßig entferntere dieser Punkte (P1,P2) als Zwischenpunkte der korrigierten Zirkularbahn ausgewählt wird.

5. Verfahren nach Anspruch 4, **dadurch gekennzeichnet,** daß bei einem Stopp zwischen Anfangspunkt (P1) und Zwischenpunkt (P2) der planmäßigen Zirkularbahn dann, wenn der Verfahrwinkel des Stopp-Punktes ($P_{STOP}$) den mittleren Verfahrwinkel zwischen Anfangspunkt (P1) und Zwischenpunkt (P2) der planmäßigen Zirkularbahn noch nicht überschritten hat, der Zwischenpunkt (P2) der planmäßigen Zirkularbahn als Zwischenpunkt der korrigierten Zirkularbahn ausgewählt wird und daß dann, wenn der Verfahrwinkel den mittleren Verfahrwinkel überschritten hat, aber den Zwischenpunkt (P2) der planmäßigen Zirkularbahn noch nicht überschritten hat, der Anfangspunkt (P1) der planmäßigen Zirkularbahn als Zwischenpunkt der korrigierten Zirkularbahn ausgewählt wird.

6. Verfahren nach einem der vorstehenden Ansprüche, **dadurch gekennzeichnet,** daß bei einem Stopp zwischen dem Zwischenpunkt und dem Endpunkt der planmäßigen Zirkularbahn eine Grenze vom Zwischenpunkt der planmäßigen Zirkularbahn aus vorgegeben ist, bei deren Überschreiten der Zwischenpunkt (P2) der planmäßigen Zirkularbahn als Zwischenpunkt der korrigierten Zirkularbahn ausgewählt wird und bei deren Unterschreiten der Anfangspunkt (P1) der planmäßigen Zirkularbahn als Zwischenpunkt der korrigierten Zirkularbahn ausgewählt wird.

7. Verfahren nach Anspruch 6, **dadurch gekennzeichnet,** daß als Grenze ein Grenzwinkel vorgegeben ist.

8. Verfahren nach Anspruch 7, **dadurch gekennzeichnet,** daß der Grenzwinkel der Größe des halben Winkels zwischen Zwischenpunkt (P2) und Endpunkt (P3) der planmäßigen Zirkularbahn entspricht.

FIG 1

FIG 2

FIG 3